# FASCICULE DE BREVET EUROPEEN

(11) **EP 1 505 760 B1**
(45) Date de publication et mention de la délivrance du brevet: **30.07.2008**
(21) Numéro de dépôt: 04103685.6
(22) Date de dépôt: 30.07.2004
(51) Int. Cl.: H04L 9/06

(54) **Procédé et processeur de protection de plusieurs calculs identiques**
Verfahren und Prozessor zum Schutz mehrerer identischer Berechnungen
Method and processor for protecting a plurality of identical computations

(30) Priorité: 01.08.2003 FR 0309577
(43) Date de publication de la demande: 09.02.2005
(73) Titulaire: STMicroelectronics S.A., 92120 Montrouge (FR)
(72) Inventeur: Teglia, Yannick, 13011 Marseille (FR); Liardet, Pierre-Yvan, 13790 Peynier (FR)
(74) Mandataire: de Beaumont, Michel

(56) Documents cités:
- EP-A- 1 115 094
- WO-A-00/41356
- WO-A-01/61915

## Description

La présente invention concerne les traitements algorithmiques effectués sur des données numériques manipulées par un microprocesseur ou un circuit intégré. L'invention concerne plus particulièrement les traitements opérés sur des données numériques dans des applications cryptographiques de chiffrement ou d'authentification mettant en oeuvre des algorithmes dits sécurisés. Dans de telles applications, les données, manipulées par les algorithmes et sur lesquelles sont effectuées des opérations, doivent pouvoir être protégées contre le piratage, c'est-à-dire des attaques extérieures visant à découvrir des données secrètes et/ou de calcul.

Un exemple d'attaque extérieure que vise à protéger la présente invention concerne les attaques connues sous les dénominations SPA (Single Power Analysis) ou DPA (Differential Power Analysis), qui consistent à analyser la consommation du circuit intégré manipulant des données pendant l'exécution d'un algorithme. En effet, lorsqu'un circuit intégré (qu'il s'agisse d'un microprocesseur ou d'un opérateur en logique câblée) exécute un calcul sur des données, le traitement et les données influent sur sa consommation.

Un exemple d'algorithme auquel s'applique l'invention est l'algorithme dit RSA utilisant le théorème dit des restes chinois (CRT) tel que décrit, par exemple, dans l'article "The Chinese Reminder Theorem and its application in a high-speed RSA crypto chip" de P, J. Grossschad, Computer Security Applications 2000 ACSAC'00, 16th Annual Conference, 11-15 Dec. 2000, pages 384-393.

Classiquement, pour masquer le traitement d'un ou plusieurs nombres, on combine ces nombres avec des quantités aléatoires, avant le traitement algorithmique.

Un inconvénient est que cela modifie le ou les nombres traités, ce qui impose d'effectuer une modification inverse en fin de traitement pour récupérer le résultat attendu. Un autre inconvénient est que le masquage par un nombre aléatoire accroît la complexité du traitement ainsi que la durée du calcul entier.

Le document WO 00/41:356 (D1) décrit un procédé de traitement cryptographique dans lequel deux processus opératoires sont exécutés de façon entrelacée en stockant des résultats intermédiaires de chaque processus et en exécutant alternativement une étape de l'un ou l'autre des processus.

Le document EP-A-1 115 094 (D2) décrit l'exécution d'un même calcul au moyen de deux exécutions simultanées parallèles et de sélectionner aléatoirement celui des processeurs fournissant le résultat du calcul.

La présente invention vise à proposer une solution pour masquer l'exécution de calculs algorithmiques. L'invention vise plus particulièrement à proposer une solution qui soit indépendante de l'algorithme mis en oeuvre, c'est-à-dire qui puisse s'appliquer quels que soient les calculs exécutés, pourvu qu'ils puissent être découpés en processus identiques et localement indépendants.

L'invention vise également à proposer une solution qui ne nuise pas à la rapidité d'exécution de l'algorithme.

L'invention vise en outre à ne pas requérir de modification des calculs effectués par l'algorithme lui-même.

Pour atteindre ces objets et d'autres, la présente invention prévoit un procédé de masquage de plusieurs processus opératoires identiques manipulant des données numériques, consistant :
à découper les processus opératoires en étapes à l'issue de chacune desquelles au moins un résultat intermédiaire est mémorisé; et
à entrelacer les étapes d'au moins deux processus en sélectionnant, à chaque fin d'étape, le processus de l'étape suivante en fonction du résultat d'un tirage non déterministe d'un nombre.

Selon un mode de mise en oeuvre de la présente invention, ledit tirage non déterministe est un tirage aléatoire.

Selon un mode de mise en oeuvre de la présente invention, en cas d'identité du tirage courant par rapport au précédent, le même processus reste exécuté pour l'étape courante, l'autre processus étant sélectionné pour l'étape courante en cas de différence du tirage courant par rapport au tirage précédent.

Selon un mode de mise en oeuvre de la présente invention, le tirage fournit un nombre sur un bit dont l'état conditionne le changement ou le maintien de la sélection de processus opératoire par rapport à l'étape précédente.

L'invention prévoit également un processeur d'exécution de processus opératoires identiques découpables en étapes à l'issue de chacune desquelles au moins un résultat intermédiaire est mémorisé , comportant des moyens pour entrelacer en fonction du résultat d'un tirage non déterministe d'un nombre, au moins deux processus opératoirs à exécuter.

Selon un mode de réalisation de la présente invention, ledit tirage fournit un seul bit dont l'état conditionne le maintien de l'exécution du processus opératoire précédent ou le passage à un autre processus opératoire.

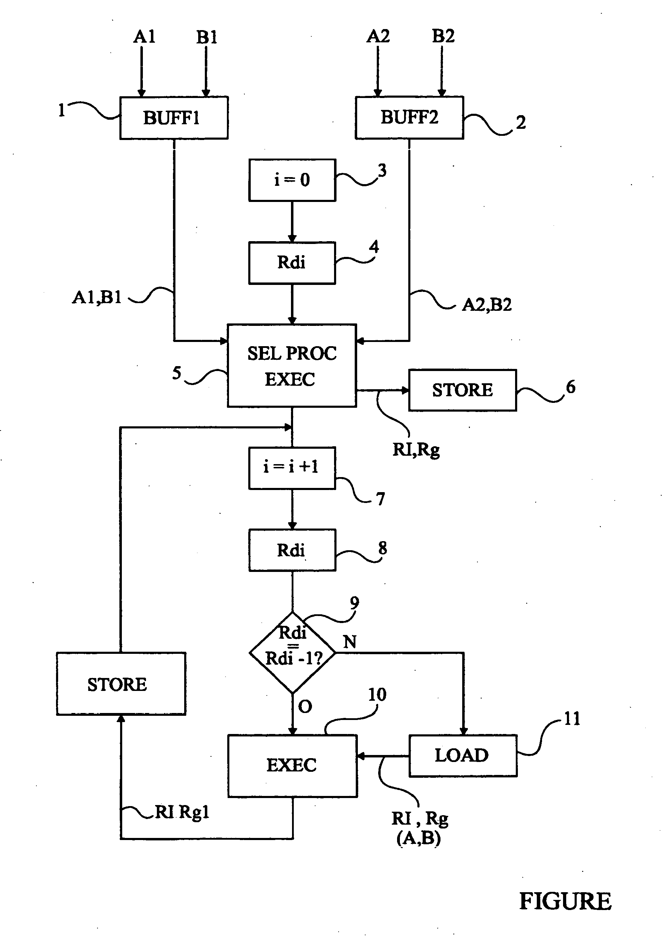

Ces objets, caractéristiques et avantages, ainsi que d'autres de la présente invention seront exposés en détail dans la description suivante de modes de mise en oeuvre et de réalisation particuliers faite à titre non-limitatif en relation avec la figure jointe qui illustre, de façon très schématique et sous forme de blocs, un mode de mise en oeuvre du procédé de l'invention.

Une caractéristique de la présente invention est de prévoir un basculement aléatoire d'un processus opératoire à un autre, ces processus mettant en oeuvre les mêmes opérations et étant exécutés séquentiellement. Selon l'invention, on découpe artificiellement les processus opératoires en étapes (chaque étape correspondant par exemple à une ou plusieurs opérations élémentaires telles qu'une addition, multiplication, etc.) à l'issue de chacune desquelles il est possible d'interrompre le processus en mémorisant un ou plusieurs résultats intermédiaires. Chaque processus opératoire est au sens de l'invention localement indépendant des autres, c'est-à-dire qu'aucun processus masqué par l'invention n'a besoin d'un résultat intermédiaire provenant d'un autre processus à masquer. Cette condition est aisément satisfaite en choisissant le cas échéant de grouper en un seul processus opératoire au sens de l'invention, plusieurs calculs liés entre eux. Les données manipulées par les processus peuvent être identiques ou différentes.

Par souci de clarté, l'invention sera exposée ci-après en relation avec une application à deux calculs (processus opératoires) identiques mettant en oeuvre chacun deux données d'entrée et fournissant une donnée de sortie. On notera toutefois que l'invention s'applique plus généralement à un nombre quelconque de calculs identiques découpés par étapes et quel que soit le nombre de données d'entrée (une ou plusieurs) et de sortie et de résultats intermédiaires mis en jeu pourvu de prévoir les éléments de mémorisation suffisants. De même, l'invention sera exposée en faisant référence à un tirage aléatoire pour sélectionner le basculement d'un processus à l'autre. Toutefois, elle s'applique plus généralement à un tirage non déterministe d'un nombre (par exemple, pseudo-aléatoire ou issu d'un calcul), c'est-à-dire dont le résultat ne peut pas être préjugé.

La figure illustre un mode de réalisation de l'invention appliquée à deux calculs ou processus opératoires identiques PROC1 et PROC2 mettant en oeuvre chacun deux nombres A1, B1 et A2, B2. Ces processus sont découpés en n étapes chacun, un résultat intermédiaire pouvant être mémorisé à l'issue de chaque étape pour permettre une interruption et une reprise ultérieure du calcul. La découpe des processus s'effectue, par exemple, lors de l'écriture de ceux-ci sous forme logicielle en prévoyant une interruption à chaque fin d'étape. Une découpe similaire est possible dans une réalisation par une machine d'états en logique câblée.

Selon l'invention, lors de l'initialisation des processus PROC1 et PROC2, on mémorise (bloc 1, BUFF1 et bloc 2, BUFF2) les données d'initialisation (par exemple, le rang de l'étape à effectuer - ici, l'étape 1) ainsi que les opérandes A1, B1 et A2, B2 nécessaires aux calculs. Les éléments de mémorisation sont, par exemple, constitués de circuits de mémoire à accès direct (DMA) qui, de préférence servent par la suite à mémoriser les données intermédiaires des calculs (étape suivante et résultat(s) intermédiaire(s)).

Selon l'invention, on initialise un compteur ou analogue (bloc 3, i=0). Puis, on tire un premier nombre aléatoire (bloc 4, Rdi), dans cet exemple sur un bit.

En fonction du nombre aléatoire tiré, on sélectionne l'un ou l'autre des processus (bloc 5, SEL PROC EXEC) pour exécution de sa première étape. Par exemple, pour un nombre Rdi à 0, on exécute une étape du processus PROC1 et pour un nombre 1, on exécute une étape du processus PROC2. Pour l'exécution de cette étape, on charge les données d'entrée A1, B1 ou A2, B2 du processus sélectionné.

A la fin de cette étape, le résultat intermédiaire RI est mémorisé (bloc 6, STORE) ainsi que le rang Rg de l'étape suivante (ou courante) de façon à permettre de redémarrer ultérieurement le processus à la bonne étape. Cette mémorisation s'effectue pour l'un ou l'autre des processus PROC1 ou PROC2, par exemple, en utilisant les éléments de mémorisation BUFF1 ou BUFF2 qui lui sont affectés. Puis, on incrémente le nombre i (bloc 7, i=i+1) afin de tirer un nouveau nombre aléatoire Rdi (bloc 8). Ce tirage sert à sélectionner celui des processus PROC1 ou PROC2 qui va faire l'objet du calcul lors de la phase suivante.

De préférence, on effectue un test (bloc 9, Rdi=Rdi-1 ?) par rapport au nombre aléatoire précédent. En cas d'identité entre les deux nombres, on exécute l'étape suivante du même processus (bloc 10, EXEC). Dans le cas contraire, on bascule vers l'autre processus. Pour cela, on recharge les données nécessaires (bloc 11, LOAD). Si ce processus n'a pas encore été sélectionné, il s'agit de ses données d'entrées A et B. Sinon, il s'agit d'un résultat intermédiaire et d'un rang d'étape pour redémarrer le calcul au bon endroit de l'algorithme.

A l'issue de l'exécution de l'étape 10, on revient à l'incrémentation du compteur i (bloc 7), après avoir mémorisé (bloc 12, STORE) le résultat intermédiaire et le rang de l'étape du processus qui vient d'être exécuté.

Chaque processus devant être exécuté en n étapes, le nombre de passages dans le bloc 10 est 2n-1. Bien que cela n'ait pas été représenté, des tests supplémentaires sont prévus pour détecter la fin d'exécution afin de sélectionner toujours le même processus quel que soit le résultat du tirage en cas de répartition non équiprobable des tirages ayant conduit à une exécution plus rapide de l'un des processus. En variante, on poursuit le calcul du processus terminé avec des données aléatoires. Cette variante n'est toutefois pas préférée car elle requiert de pouvoir retrouver le résultat du calcul à la fin et entraîne une diminution de la rapidité d'exécution globale.

En fin de calcul, le résultat final (mémorisé comme s'il s'agissait d'un résultat intermédiaire) est présent dans l'élément de mémorisation affecté au processus concerné.

Ainsi, à chaque fin d'étape d'un processus de calcul, on est susceptible de passer ou non selon le résultat d'un tirage aléatoire, à l'autre processus. On peut considérer que l'on entrelace aléatoirement les deux processus de calcul. Un tel entrelacement permet de masquer complètement leur exécution.

On notera que le fait de ne pas affecter le résultat d'un tirage aléatoire à l'un des deux processus de façon constante rend le système anti-piratage encore plus robuste.

La taille du nombre Rdi est, dans l'exemple de la figure, d'un seul bit dans la mesure où ce mode de réalisation prévoit une alternance entre deux calculs.

Pour le cas où le nombre de processus de calcul est supérieur à deux, on pourra prévoir, par exemple, lors du changement de processus, d'effectuer une sélection du processus en fonction du résultat du tirage aléatoire. La taille du nombre Rdi est fonction du nombre de processus.

Un avantage de la présente invention est que le fait que l'exécution des deux processus soit entrelacée optimise le masquage. De plus, l'application à des processus opératoires identiques permet d'utiliser un même circuit matériel pour les deux calculs dont les donnés subissent les mêmes opérations. Un examen de la consommation du circuit intégré ne peut alors pas permettre de remonter jusqu'aux données manipulées dans la mesure où l'invention supprime toute corrélation entre l'étape de calcul courante et le processus opératoire.

Le fait qu'il soit nécessaire de mémoriser les résultats intermédiaires pour autoriser le basculement d'un processus à un autre n'est pas gênant dans la mesure où ces résultats intermédiaires sont différents d'une exécution à une autre d'un même calcul.

Bien entendu, la présente invention est susceptible de diverses variantes et modifications qui apparaîtront à l'homme de l'art. En particulier, la mise en oeuvre pratique de l'invention ne requiert que des outils classiques. Par exemple, par rapport à des processus opératoires s'exécutant en parallèle, l'invention prévoit à l'inverse une mémorisation temporaire des résultats intermédiaires des différents processus opératoires pour permettre le basculement de l'un à l'autre.

## Revendications

1. Procédé de masquage de plusieurs processus opératoires identiques manipulant des données numériques, lesdits processus étant découpés en étapes à l'issue de chacune desquelles au moins un résultat intermédiaire est mémorisé (6), **caractérisé en ce que** les étapes d'au moins deux processus sont entrelacées en sélectionnant, à chaque fin d'étape, le processus de l'étape suivante en fonction du résultat d'un tirage non déterministe d'un nombre.

2. Procédé selon la revendication 1, dans lequel ledit tirage non déterministe est un tirage aléatoire (8).

3. Procédé selon la revendication 1 ou 2, dans lequel en cas d'identité du tirage courant par rapport au précédent, le même processus reste exécuté pour l'étape courante, l'autre processus étant sélectionné pour l'étape courante en cas de différence du tirage courant par rapport au tirage précédent.

4. Procédé selon l'une quelconque des revendications 1 à 3, dans lequel le tirage fournit un nombre sur un bit dont l'état conditionne le changement ou le maintien de la sélection de processus opératoire par rapport à l'étape précédente.

5. Processeur d'exécution de processus opératoires identiques découpables en étapes à l'issue de chacune desquelles chaque processus est interrompu avec mémorisation (6) d'un résultat intermédiaire, **caractérisé en ce qu'**il comporte des moyens pour entrelacer (5, 9, 10, 11), en fonction du résultat d'un tirage non déterministe d'un nombre, au moins deux processus opératoires à exécuter.

6. Processeur selon la revendication 5, dans lequel ledit tirage (4, 8) fournit un seul bit dont l'état conditionne le maintien de l'exécution du processus opératoire précédent ou le passage à un autre processus opératoire.

7. Processeur selon la revendication 5 ou 6, comportant des moyens pour la mise en oeuvre du procédé conforme à l'une quelconque des revendications 1 à 4.

## Claims

1. A method for masking several identical functional processes manipulating digital data, said processes being divided into steps at the end of each of which at least one intermediary result is stored (6), **characterized in that** the steps of at least two processes are interleaved by selecting, at each step end, the process of the next step according to the result of a non-deterministic drawing of a number.

2. The method of claim 1, wherein said non-deterministic drawing is a random drawing (8).

3. The method of claim 1 or 2, wherein in case of an identity of the current drawing with the previous one, the same process remains executed for the current step, the other process being selected for the current step in case of a difference between the current drawing and the previous drawing.

4. The method of any of claims 1 to 3, wherein the drawing provides a one bit number, the state of which conditions the changing or the maintaining of the functional process selection with respect to the previous step.

5. A processor for executing identical functional processes dividable into steps at the end of each of which each process is interrupted with the storage (6) of an intermediary result, **characterized in that** it comprises means for interleaving (5, 9, 10, 11), according to the result of a non-deterministic drawing of a number, at least two functional processes to be executed.

6. The processor of claim 5, wherein said drawing (4, 8) provides a single bit, the state of which conditions the maintaining of the execution of the previous functional process or the switching to another functional process.

7. The processor of claim 5 or 6, comprising means for implementing the method of any of claims 1 to 4.

## Patentansprüche

1. Verfahren zum Maskieren von mehreren identischen Betriebsprozessen, die digitale Daten manipulieren, wobei die Prozesse in Schritte aufgeteilt sind, wobei am Ende von jedem davon, mindestens ein Zwischenergebnis gespeichert wird (6), **dadurch gekennzeichnet, dass** die Schritte von mindestens zwei Prozesse an jedem Schrittende durch Auswahl des Prozesses des nächsten Schrittes als Funktion des Ergebnisses des nicht deterministischen bzw. unbestimmten Ziehens einer Zahl ineinander geschoben sind.

2. Verfahren nach Anspruch 1, wobei das nicht deterministische Ziehen bzw. Auswählen eine Zufallsauswahl (8) ist.

3. Verfahren nach Anspruch 1 oder 2, wobei in einem Fall einer Übereinstimmung der gegenwärtigen Auswahl mit der vorherigen Auswahl der gleiche Prozess für den gegenwärtigen Schritt weiter ausgeführt wird, wobei der andere Prozess für den gegenwärtigen Schritt im Fall eines Unterschiedes zwischen der gegenwärtigen Auswahl und der vorherigen Auswahl ausgeführt wird.

4. Verfahren nach einem der Ansprüche 1 bis 3, wobei die Auswahl eine Bitzahl liefert, deren Zustand das Wechseln oder das Beibehalten der Auswahl des Funktionsprozesses bezüglich des vorherigen Schrittes konditioniert bzw. bestimmt.

5. Prozessor zur Ausführung von identischen Funktionsprozessen, die in Schritte aufzuteilen sind, wobei am Ende jedes dieser Schritte jeder Prozess durch das Speichern (6) eines Zwischenergebnisses unterbrochen ist, **dadurch gekennzeichnet, dass** er Mittel aufweist, um als Funktion des Ergebnisses einer nicht deterministischen Auswahl einer Zahl mindestens zwei auszuführende Funktionsprozesse ineinander zu schieben (5, 9, 10, 11).

6. Prozessor nach Anspruch 5, wobei die Auswahl (4, 8) ein einzelnes Bit liefert, wobei dessen Zustand das Beibehalten der Ausführung des vorherigen Funktionsprozesses oder das Umschalten auf einen anderen Funktionsprozess konditioniert bzw. bestimmt.

7. Prozessor nach Anspruch 5 oder 6, der Mittel zum Einrichten des Verfahrens gemäß einem der Ansprüche 1 bis 4 aufweist.
